# EUROPEAN PATENT APPLICATION

(11) **EP 3 524 576 A1**
(43) Date of publication of application: **14.08.2019**
(21) Application number: 18210945.4
(22) Date of filing: 07.12.2018
(51) Int. Cl.: C02F 1/00, G05D 7/06, C02F 1/32, C02F 103/00

(54) **CONTROL VALVES ARRANGEMENT FOR WATER TREATMENT DEVICE**

(30) Priority: 13.02.2018 JP 2018023544
(71) Applicant: Miura Co., Ltd., Matsuyama-shi, Ehime 799-2696 (JP)
(72) Inventor: TANGE, Tomoaki, Ehime, Ehime 799-2696 (JP); OTANI, Hidehiko, Ehime, Ehime 799-2696 (JP); SUMIKURA, Hisakazu, Ehime, Ehime 799-2696 (JP); YAMAMOTO, Takao, Ehime, Ehime 799-2696 (JP)
(74) Representative: Gulde & Partner

(57) **Abstract**

When a water treatment is performed in a low flow rate region, purification unit is prevented from being exposed to a high pressure state. According to the present invention, there is provided a water treatment device 10 that performs purification treatment on water, which includes purification unit 11, 12, a first control valve FCV1, and a second control valve FCV2. The purification unit 11, 12, the first control valve FCV1, and the second control valve FCV2 are respectively disposed on a purification line through which the water flows during the purification treatment, the first control valve FCV1 is disposed on an upstream side of the purification unit 11, 12, the second control valve FCV2 is a control valve disposed on a downstream side of the purification unit 11, 12 and capable of adjusting an opening degree, and a pressure of the water flowing through the purification unit 11, 12 is dropped by the first control valve FCV1.

## Description

### TECHNICAL FIELD

The present invention relates to a water treatment device that performs purification treatment on water.

### BACKGROUND ART

A vessel such as a tanker usually stores water called ballast water in a ballast tank provided on the vessel in order to balance the vessel under way while travelling toward another destination after unloading freight such as crude petroleum. Ballast water is normally charged at an unloading port and discharged at a loading port. Such a vessel is provided with a water treatment device (ballast water treatment device) that performs purification treatment on the ballast water in order to prevent a destruction of an ecosystem due to an injection and a discharge of the ballast water.

For example, Patent Literature 1 discloses a ballast water treatment device including a valve capable of adjusting a flow rate (flow rate control valve).

Patent Literature 1: JP 2014-227063 A

### DISCLOSURE OF THE INVENTION

### Problems to be solved by the Invention

However, in a case of a configuration disclosed in Patent Document 1, particularly when ballast water is treated in a state in which the flow rate is throttled (low flow rate region), purification unit such as a filter located on an upstream side of a flow rate control valve is exposed to a high pressure state, and each component of the purification unit may be damaged. Further, when the flow rate control valve is throttled, cavitation may occur on a downstream side thereof.

A problem occurring in such a low flow rate region is not limited to the ballast water treatment device that treats seawater, and occurs generally in the water treatment device that treats water such as rivers, lakes, ponds, industrial water, or the like.

The present invention has been made in view of the above circumstances, and an object thereof is to prevent purification unit from being exposed to a high pressure state when water treatment is performed in a low flow rate region. Further, another object of the present invention is to suppress cavitation on a downstream side of a valve that adjusts a flow rate.

### Means for solving the problem

According to an aspect of the present invention, there is provided a water treatment device that performs purification treatment on water, including purification unit, a first valve, and a second valve. The purification unit, the first valve, and the second valve are respectively disposed on a purification line through which the water flows during the purification treatment, the first valve is disposed on an upstream side of the purification unit, the second valve is a control valve disposed on a downstream side of the purification unit and capable of adjusting an opening degree, and a pressure of ballast water flowing through the purification unit is dropped by the first valve.

According to the aspect of the present invention, by providing an additional valve (first valve) on the upstream side of the purification unit, the pressure gradually drops in front of and behind the purification unit, and it is possible to prevent the purification unit from being exposed to a high pressure state even in a low flow rate region. Further, even in a case where the second valve is throttled to reduce a flow rate, a pressure difference between areas in front of and behind the second valve does not become large such that an occurrence of cavitation can be prevented.

Various embodiments of the present invention will be exemplified below. The embodiments described below can be combined with one another.

Preferably, the water treatment device further includes the controller, the first valve is also the control valve capable of adjusting the opening degree, and the controller is configured to control the opening degree of the first valve.

Preferably, the water treatment device further includes a flow meter and a pressure gauge, the flow meter being disposed on the purification line and measuring a flow rate of the water flowing through the purification line, the pressure gauge being disposed on the purification line and gauging a pressure of the water flowing through the purification line. The controller controls the opening degree of the first valve and the second valve based on the flow rate of the water measured by the flow meter and the pressure gauged by the pressure gauge.

Preferably, the controller controls the opening degree of the first valve such that a pressure change range becomes small in a state in which the opening degree of the second valve is kept constant.

Preferably, the controller adjusts the opening degrees of the first valve and the second valve such that the flow rate and the pressure are respectively maintained within predetermined ranges.

According to another aspect of the present invention, there is provided a water treatment device that treats water, including a filter, ultraviolet irradiation unit, first to fifth lines, first to fifth valves, a pressure gauge, a flow meter, controller, an upstream side connection portion, and a downstream side connection portion. The first line bypasses the filter and the ultraviolet irradiation unit, the second line connects the upstream side connection portion to the filter, the third line connects the filter to the ultraviolet irradiation unit, the fourth line connects the first line to the third line, the fifth line connects the ultraviolet irradiation unit to the downstream side connection portion, the first valve is disposed on the first line, the second valve is a control valve disposed on the second line and capable of adjusting an opening degree, the third valve is the control valve disposed on an upstream side of a connection position of the third line to the fourth line and capable of adjusting the opening degree, the fourth valve is the control valve disposed on the fourth line and capable of adjusting the opening degree, the fifth valve is the control valve disposed on the fifth line and capable of adjusting the opening degree, the pressure gauge is disposed on the second line, and the controller adjusts the opening degrees of the second to fifth valves in accordance with values of the pressure gauge and the flow meter.

### BRIEF DESCRIPTION OF THE DRAWINGS

FIG. 1 is a diagram showing a state in which a water treatment device 10 according to an embodiment of the present invention is introduced into a ballast device of a vessel.
FIG. 2 is a diagram showing a flow path when a filter 11 and an ultraviolet reactor 12 are bypassed in the water treatment device 10 of FIG. 1.
FIG. 3 is a diagram showing the flow path when purification treatment is performed on ballast water which is caused to flow through the filter 11 and the ultraviolet reactor 12 in the water treatment device 10 of FIG. 1.
FIG. 4 is a flowchart for explaining an operation of the water treatment device 10 of FIG. 1 in the low flow rate mode M2.
FIG. 5 is a diagram showing the flow path when only the filter 11 is bypassed in the water treatment device 10 of FIG. 1.

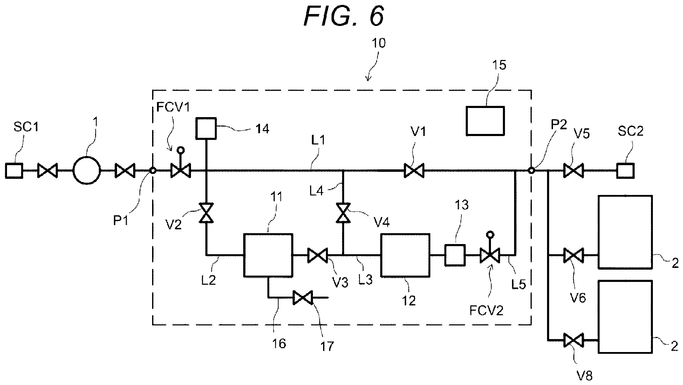

FIG. 6 is a diagram showing an outline of a ballast device according to modification example 1 of the present invention in which the water treatment device 10 is introduced.
FIG. 7 is a diagram showing an outline of a ballast device according to modification example 2 of the present invention in which the water treatment device 10 is introduced.
FIG. 8 is a diagram showing an outline of a ballast device according to modification example 3 of the present invention in which the water treatment device 10 is introduced.

### PREFERRED MODE FOR CARRYING OUT THE INVENTION

Embodiments of the present invention will be described below. Various features shown in the embodiments described below can be combined with each other. Further, an invention is established independently for each feature.

### 1. Configuration of Ballast Device

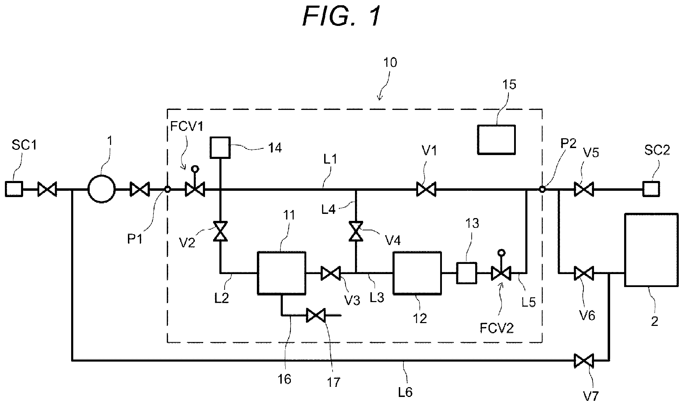

FIG. 1 is a schematic diagram showing a state in which a water treatment device 10 according to an embodiment of the present invention (ballast water treatment device) is introduced into a ballast device of a vessel. The ballast device performs a ballasting operation in which outboard water such as seawater is taken into the vessel from sea chest SC1 and the water is injected into a ballast tank 2, and a deballasting operation in which ballast water stored in the ballast tank 2 is discharged from an outboard discharge port SC2. As shown in FIG. 1, the ballast device of the present embodiment mainly includes a pump 1 that pumps the ballast water flowing through the vessel (ballast pump), the water treatment device 10, and the ballast tank 2. Hereinafter, the configuration of the water treatment device 10 will be mainly described.

The "ballast water" in the present specification is referred to as the "ballast water" for all the water taken into the vessel regardless of whether the water is yet to be introduced (flowing) into the ballast tank 2 or the water has been discharged (flowing out) from the ballast tank 2. Further, the ballast water taken into the vessel includes the sea water, fresh water, brackish water, or the like.

### 2. Configuration of Water Treatment Device 10

The water treatment device 10 is introduced to treat the ballast water taken into the vessel and the ballast water discharged from an inside of the vessel to reduce the content of microorganisms and foreign matter contained in the ballast water. As shown in FIG. 1, the water treatment device 10 is provided between the pump 1 and the ballast tank 2 (or outboard discharge port SC2). Here, in the water treatment device 10, a connection portion on a pump 1 side is referred to as an upstream side connection portion P1, and a connection portion on a ballast tank 2 side is referred to as a downstream side connection portion P2.

The water treatment device 10 of the present embodiment includes a filter 11 that filters the ballast water by a filter, an ultraviolet reactor 12 as an ultraviolet irradiation unit for irradiating the ballast water with ultraviolet rays to sterilize the microorganisms, a flow meter 13 that measures a flow rate of the ballast water, a pressure gauge 14 that gauges a water pressure of the ballast water, and a controller 15 for controlling a flow of the ballast water flowing through the water treatment device 10. The filter 11 of the present embodiment includes a discharge pipe 16 which is provided on a primary side of the filter and which opens towards the filter to suck the wash wastewater and discharge the wastewater outboard for washing or backwashing of the filter during a filtration treatment. The discharge pipe 16 is provided with a backwash valve 17. The filter 11 and the ultraviolet reactor 12 are also referred to as purification unit. In the present embodiment, a known configuration is used for the filter 11 and the ultraviolet reactor 12. Further, the water treatment device 10 is provided between the pump 1 and the ballast tank 2, or between the pump 1 and the outboard discharge port SC2.

Further, the water treatment device 10 includes a first line L1 to a fifth line L5, which are a plurality of lines that connects the respective constituent elements and through which the ballast water flows. A "line" is a generic term for a line through which a fluid can flow, such as a flow path, a path, or a pipe. Further, the water treatment device 10 also includes an on-off valve V1 to an on-off valve V4, a first control valve FCV1 as a first valve capable of adjusting an opening degree, and a second control valve FCV2 as a second valve capable of adjusting an opening degree. As for the first line L1 of the water treatment device 10, an existing line may be used
in the vessel as a part of the pipeline. Therefore, in the configuration of the water treatment device 10, the first line L1 is not indispensable. Further, as for the second to fifth lines L2 to L5, it is also possible to use existing lines in the vessel in part.

More specifically, as shown in FIG. 1, the first line L1 is a line that bypasses the purification unit and connects the upstream side connection portion P1 to the downstream side connection portion P2, and has the on-off valve V1. The second line L2 is a line connecting the first line L1 to the filter 11, and has the on-off valve V2. The third line L3 is a line connecting the filter 11 to the ultraviolet reactor 12, and has the on-off valve V3. Further, in the fourth line L4, one end is connected at a position of a downstream side of the connection position of the first line L1 to the second line L2, and an upstream side of the on-off valve V1, and the other end is connected at a position of a downstream side of the on-off valve V3 of the third line L3. The fourth line L4 has the on-off valve V4. In the fifth line L5, one end is connected to the ultraviolet reactor 12 and the other end is connected to a position on a downstream side of the on-off valve V1 of the first line L1. In the present embodiment, the flow meter 13 is installed on the fifth line L5, and the pressure gauge 14 is installed at a position of an upstream side of the connection position of the first line L1 to the fourth line L4.

In addition, the water treatment device 10 of the present embodiment is provided with a first control valve FCV1 capable of adjusting an opening degree at a position of an upstream side of connection position of the first line L1 to the second line L2, and is provided with a second control valve FCV2 capable of adjusting an opening degree at a position of a downstream side of the flow meter 13 of the fifth line L5. In this specification, in a case where the term "control valve" is used, an on-off valve which can take only two states of an open state and a closed state is excluded.

The controller 15 controls an opening and closing of the above-described on-off valves V1 to V4, thereby controlling the flow of the ballast water flowing through the water treatment device 10. Further, the controller 15 also performs control of adjusting the opening degrees of the first control valve FCV1 and the second control valve FCV2 in order to adjust the flow rate of the ballast water flowing through the purification unit.

### 3. Operation of Water Treatment Device 10

Next, the operation of the water treatment device 10 configured as described above will be described. The following operation is performed under the control of the controller 15.

### 3.1 Bypass Operation

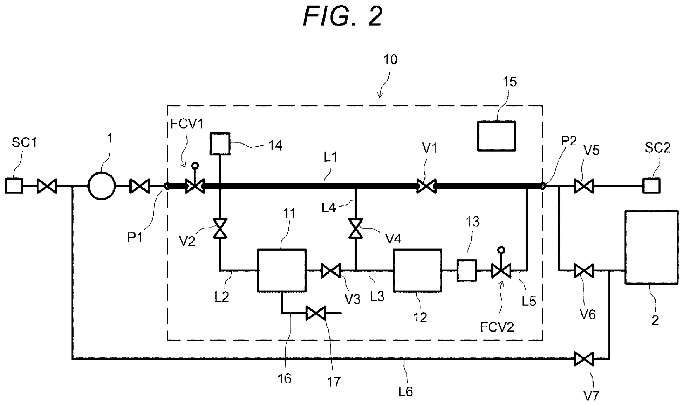

Immediately after the pump 1 is driven or in a case where purification treatment of the ballast water is not required, the controller 15 opens the on-off valve V1 and the first control valve FCV1 and closes the other on-off valves, thereby allowing the ballast water to flow through the first line L1, bypassing the filter 11 and the ultraviolet reactor 12 (see FIG. 2).

### 3.2 Purification Operation

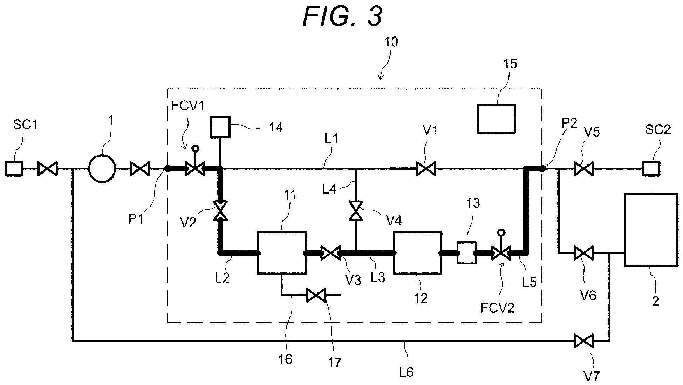

In a case where the ballast water is purified by the water treatment device 10, the controller 15 closes the on-off valves V1 and V4, opens the on-off valves V2 and V3, and sets the first control valve FCV1 and the second control valve FCV2 to predetermined opening degrees such that the ballast water flows through the filter 11 and the ultraviolet reactor 12 (purification unit) (see FIG. 3). At this time, the controller 15 also outputs an activation command of the filter 11 and the ultraviolet reactor 12. The ballast water is purified by flowing through the filter 11 and the ultraviolet reactor 12. In this embodiment, a line that passes through the first control valve FCV1, the filter 11, the ultraviolet reactor 12, and the second control valve FCV2 which are shown in FIG. 3, that is, each of a part of the first line L1, the second line L2, the third line L3, and the fifth line L5 is also referred to as a "purification line".
Further, in a case where the on-off valve V5 of the ballast device is closed and the on-off valve V6 is opened, purified ballast water is stored in the ballast tank 2, and in a case where the on-off valve V5 is opened and the on-off valve V6 is closed, the purified ballast water is discharged outboard.

Here, by controlling the opening degrees of the first control valve FCV1 and the second control valve FCV2, respectively, the controller 15 controls the flow rate of the ballast water to be subjected to the purification treatment, that is, the flow rate of the ballast water flowing through the purification unit, and also controls the pressures in the purification unit (in particular, filter 11). The flow rate of the ballast water is measured by the flow meter 13, and the pressure is gauged by the pressure gauge 14 disposed on the upstream side of the filter 11. In the present embodiment, the controller 15 controls the first control valve FCV1 and the second control valve FCV2 in two modes, a normal mode M1 and a low flow rate mode M2. These two modes of the flow rate control and the pressure control of the ballast water will be described in detail below.

### <Normal Mode M1>

The normal mode M1 is a mode in which a rated flow rate, that is, a flow rate that can be subjected to the purification treatment and is efficient, is caused to flow through the purification unit such that the ballast water is subjected to the purification treatment. Specifically, the flow rate of the ballast water is increased in a case where an amount of the ballast water that can be subjected to the purification treatment by the filter 11 and the ultraviolet reactor 12 is large, for example, in a case where the quality of the flowing ballast water is good. Further, in a case where a treatment capacity of the ultraviolet reactor 12 is higher than the filter, the output of the ultraviolet reactor 12 is caused to be decreased. On the other hand, the flow rate is reduced in a case where the amount of the ballast water that can be subjected to the purification treatment by the filter 11 and the ultraviolet reactor 12 is small, for example, in a case where the quality of the ballast water is poor. It is preferable that the flow rate of the ballast water to flow is set to a lower rated flow rate between the rated flow rate at which the filter 11 can perform the filtration treatment and the rated flow rate at which the ultraviolet reactor 12 can perform sterilization treatment on the microorganisms. Accordingly, the ballast water appropriately treated by the purification unit can be stored or discharged in the shortest time.

Further, in the normal mode M1, the controller 15 controls the flow rate to be kept substantially constant and also controls a pressure change to be suppressed within a predetermined range. That is, the pressure is maintained between a lower limit value Pmin and an upper limit value Pmax while the flow rate is maintained between a lower limit value Qmin and an upper limit value Qmax. Specifically, the controller 15 controls the flow rate of the ballast water by opening and closing the second control valve FCV2, and controls the pressure by adjusting the opening degree of the first control valve FCV1.

More specifically, the controller 15 increases the opening degree of the second control valve FCV2 in a case where the flow rate of the ballast water measured by the flow meter 13 is lower than the lower limit value, and decreases the opening degree of the second control valve FCV2 in a case where the flow rate of the ballast water exceeds the upper limit value. Here, the ballast water flowing through the water treatment device 10 increases in a case where the opening degree of the second control valve FCV2 is increased, and decreases in a case where the opening degree of the second control valve FCV2 is decreased. Further, the controller 15 increases the opening degree of the first control valve FCV1 in a case where the pressure gauged by the pressure gauge is lower than the lower limit value, and decreases the opening degree of the first control valve FCV1 in a case where the pressure is higher than the upper limit value.

The controller 15 does not simultaneously operate the first control valve FCV1 and the second control valve FCV2. This is because the pressure and the flow rate change for a while immediately after the opening and closing operations of the control valves, and when the one control valve is operated based on the change value of the other control valve, the control becomes difficult.

In the normal mode M1, the controller 15 performs the control as described above such that a pressure change range becomes small while the purification unit is caused to treat the ballast water of a desired flow rate. Therefore, a sudden pressure change is suppressed, and the filter of the purification unit, in particular, the filter 11 is prevented from being adversely affected. Here, the sudden pressure change unit that, in particular, the pressure becomes high. Further, in the normal mode M1, the filter 11 also performs the washing operation or the backwashing of the filter that discharges the wash wastewater from the discharge pipe 16 outboard by opening the backwash valve 17; the flowing ballast water, however, is used as the wash water for the backwashing. Therefore, when the pressure of the flowing ballast water drops too much, the pressure of the wash water may also be insufficient so as to cause an insufficient washing. However, since the water treatment device of the present embodiment suppresses the pressure change range and suppresses the pressure drop of the ballast water, the backwashing of the filter 11 is prevented from becoming insufficient.

In the normal mode M1, the controller 15 controls a maximum amount of one operation of the second control valve FCV2 to be small as the opening degree is low and to be large as the opening degree is large. For example, the maximum amount of the one operation of the second control valve FCV2 is adjusted every 3 seconds. Specifically, for example, the maximum operation amount is set to Y1 when the opening degree is equal to or lower than X1, the maximum operation amount is set to Y2 (>Y1) when the opening degree is X2 (>X1) to X3 (>X2), and the maximum operation amount is set to Y3 (>Y2) when the opening degree is equal to or higher than X3. This is because the change in the flow rate and the pressure in accordance with the opening degree change becomes larger in a case where the opening degree is low than in a case where the opening degree is high. By such a control, in the case where the opening degree is high, the maximum operation amount is caused to be large to enable a fast pressure adjustment, and in the case where the opening degree is low, the maximum operation amount is caused to be small to suppress the sudden pressure change.

### <Low Flow Rate Mode M2>

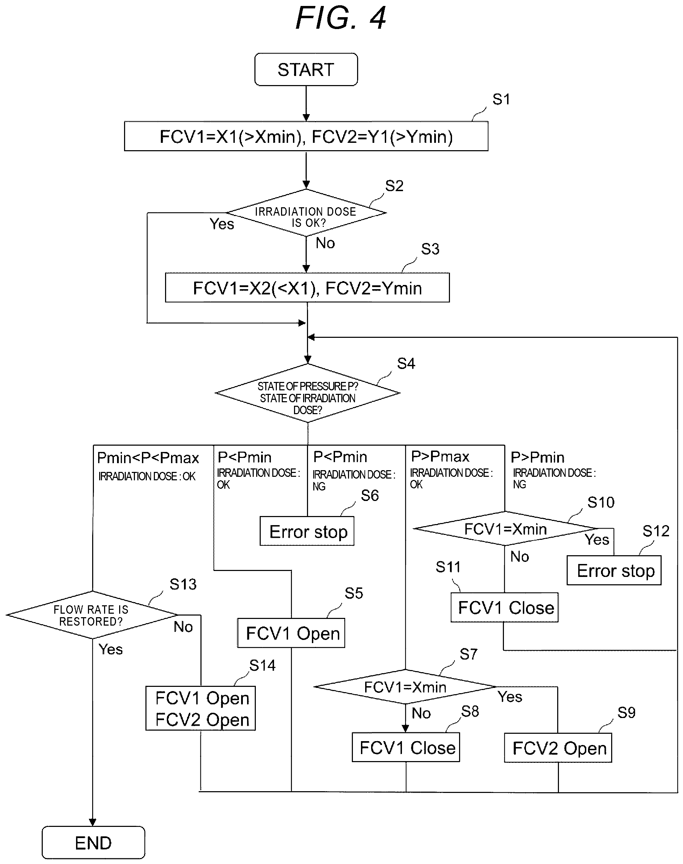

The low flow rate mode M2 is a mode in which, for example, in a case where the quality of the flowing ballast water is poor, the flow rate of the flowing ballast water is reduced to perform the purification treatment in order to secure an irradiation dose by the ultraviolet rays by the ultraviolet reactor 12. In the low flow rate mode M2, the controller 15 calculates the irradiation dose with respect to the ballast water from the flow rate measured by the luminometer (not shown) included in the ultraviolet reactor 12 and the flow meter 13. The controller 15 controls the first control valve FCV1 and the second control valve FCV2 based on the calculated irradiation dose and the pressure gauged by the pressure gauge 14. Specifically, the controller 15 controls the first control valve FCV1 and the second control valve FCV2 to suppress the flow rate to keep the irradiation dose equal to or higher than a predetermined value, and controls the pressure to be maintained within the predetermined range. Hereinafter, the operation of the low flow rate mode M2 will be described in more detail with reference to the flowchart of FIG. 4. A minimum opening degree Xmin is set to the first control valve FCV1, and a minimum opening degree Ymin is set to the second control valve FCV2. Further, an assumption is made that, over the following steps, the irradiation dose is set to two states: sufficient (OK) or insufficient (No Good), and the pressure is set to three states: equal to or lower than the lower limit value Pmin, in a normal state between the lower limit value Pmin and the upper limit value Pmax, or equal to or higher than the upper limit value Pmax.

First, in step S1, the controller 15 sets the opening degree of the first control valve FCV1 to X1 which is higher than the minimum opening degree Xmin and lower than the opening degree in the normal mode M1. Further, the opening degree of the second control valve FCV2 is set to Y1 which is higher than the minimum opening degree Ymin and lower than the opening degree in the normal mode M1.

Next, in step S2, in a case where the irradiation dose is sufficient, that is, in a case where the flow rate is a rate at which it is possible to sufficiently irradiate the flowing ballast water with the ultraviolet rays, with respect to the water quality at that time, the step proceeds to step S4. On the other hand, in a case where the irradiation dose is not sufficient, that is, in a case where the flow rate is too high, with respect to the water quality at that time, the controller 15 sets the opening degree of the first control valve FCV1 to X2 which is lower than X1 and sets the opening degree of the second control valve FCV2 to the minimum opening degree Ymin, in step S3.

Next, in step S4, the opening degree of the first control valve FCV1 or the second control valve FCV2 is adjusted by the predetermined opening degree, in accordance with the states of a pressure P and the irradiation dose. Here, the predetermined opening degree, which is the adjustment width for adjusting the opening degree, is set to be a small adjustment width so as not to cause the sudden change in the pressure and the flow rate, and is set to, for example, be adjusted 1% at a time. Hereinafter, the control of each state of the pressure and the irradiation dose will be described specifically.

First, in a case where the pressure is equal to or lower than the lower limit value Pmin and the irradiation dose is sufficient, the controller 15 opens the first control valve FCV1 by the predetermined opening degree in step S5, and returns to the determination step S4 again. On the other hand, in a case where the pressure is equal to or lower than the lower limit value Pmin and the irradiation dose is insufficient, the controller 15 performs an error-stop on the water treatment device 10 in step S6.

Further, in a case where the pressure is equal to or higher than the upper limit value Pmax and the irradiation dose is sufficient, the controller 15 determines whether or not the opening degree of the first control valve FCV1 is already the minimum opening degree Xmin in step S7. In a case where the opening degree of the first control valve FCV1 is equal to or higher than the minimum opening degree Xmin, the first control valve FCV1 is closed by the predetermined opening degree in step S8, and the step returns to the determination step S4. On the other hand, in a case where the opening degree of the first control valve FCV1 is the minimum opening degree Xmin in step S7, the second control valve FCV2 is opened by the predetermined opening degree in the following step S9, and the step returns to the determination step S4.

Further, in a case where the pressure is equal to or higher than the lower limit value Pmin and the irradiation dose is insufficient, the controller 15 determines whether or not the opening degree of the first control valve FCV1 is already the minimum opening degree Xmin in step S10. The condition that "the pressure is equal to or higher than the lower limit value Pmin" includes cases where the pressure is equal to or lower than the upper limit value Pmax and where the pressure is higher than the upper limit value Pmax. In a case where the first control valve FCV1 is equal to or higher than the minimum opening degree Xmin, the first control valve FCV1 is closed by the predetermined opening degree in step S11, and the step returns to the determination step S4. On the other hand, in a case where the opening degree of the first control valve FCV1 is the minimum opening degree Xmin in step S10, the controller 15 performs the error-stop on the water treatment device 10 in step S12.

Finally, in a case where the pressure is within the normal range between the lower limit value Pmin or higher and the upper limit value Pmax or lower and the irradiation dose is sufficient, an assumption is made that the water quality is improved and an additional irradiation dose is possible, and the control is performed to increase the flow rate to shift from the low flow rate mode M2 to the normal mode M1. Specifically, the flow rate is determined in step S13, and when the flow rate is restored to the flow rate in the normal mode M1, the low flow rate mode M2 is ended. On the other hand, when the flow rate is still low, the flow rate is increased by opening the first control valve FCV1 and the second control valve FCV2 by the predetermined opening degree, respectively, and the step returns to step S4. Also in this case, when step S14 is repeated in a state where the pressure is within the normal range and the irradiation dose is sufficient, a determination is made that the flow rate has been restored in step S13, and the mode shifts to the normal mode M1.

A configuration may be adopted such that the mode is switched between the normal mode M1 and the low flow rate mode M2 automatically by the controller 15, or a configuration of a manual switch may be adopted.

As described above, in the low flow rate mode M2 of the present embodiment, the controller 15 basically performs the control to open the first control valve FCV1 in a case of increasing the pressure, and performs the control to close the first control valve FCV1 in a case of decreasing the pressure. Further, in a case where the determination is made that the irradiation dose is sufficient, the control is performed to open the second control valve FCV2 in order to increase the flow rate and improve the treatment efficiency.

In the low flow rate mode M2, the controller 15 performs the control as described above such that the flow rate can be suppressed to a low flow rate that can be treated by the purification unit, and the pressure change range can become small. That is, in the water treatment device 10, when the opening degree of the second control valve FCV2 is decreased in order to reduce the flow rate of the ballast water subjected to the purification treatment, cavitation may occur due to the sudden pressure drop between in front of and behind the second control valve FCV2. As a result, the flow rate adjustment may become not possible, or the valve or other devicees may be damaged. However, in the configuration of the present embodiment, even in a low flow rate region in which the amount of the ballast water to flow is reduced, the controller 15 controls the opening degree of the first control valve FCV1 installed on the upstream side of the purification unit in addition to the second control valve FCV2 such that the flow rate and the pressure of the ballast water are adjusted. As a result, it is possible to suppress the occurrence of the cavitation and an influence of the pressure change on the purification unit. By continuing the above control in the low flow rate mode M2, it is possible to shift to the normal mode M1 when the water quality is improved.

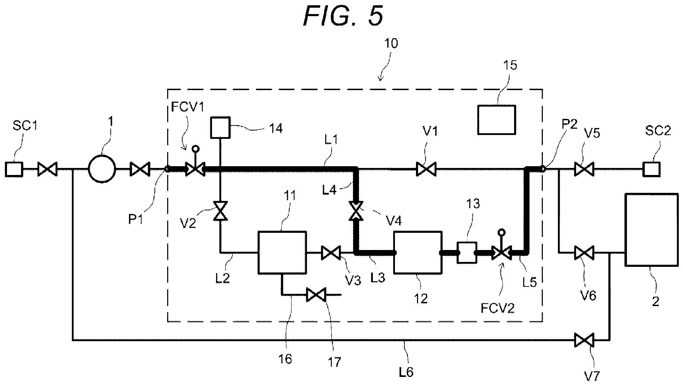

In the above description, an example of the case has been described, in which the ballast water flows through both the filter 11 and the ultraviolet reactor 12 to be purified. However, in the case of the deballasting operation, for example, it is possible to bypass the filter 11 by closing the on-off valves V2 and V3 and opening the on-off valve V4, and to perform only the treatment of the ultraviolet reactor 12 (see FIG. 5). In the deballasting operation, the lines that pass through the first control valve FCV1, the ultraviolet reactor 12, and the second control valve FCV2 which are shown in FIG. 5, that is, a part of the first line L1, the fourth line L4, a part of the third line L3, and the fifth line L5 become the "purification line". In the ballast device, during the deballasting operation, the ballast water stored in the ballast tank 2 flows into the water treatment device 10 through the sixth line L6 and the pump 1 by opening the on-off valve V7. Also in this case, by controlling the first control valve FCV1 and the second control valve FCV2 by the controller 15, the occurrence of the cavitation can be suppressed in a case where the flow rate is throttled as well. Also during the deballasting operation, by controlling the first control valve FCV1 and the second control valve FCV2 by the controller 15, it is possible to suppress the occurrence of the cavitation and the influence of the pressure change on the purification unit for either of the normal mode M1 and the low flow rate mode M2.

### 4. Modification Example

The present invention can also be implemented in the following embodiments.

### <Modification Example 1>

In the above embodiment, as shown in FIG. 1, the ballast device is configured to include only one ballast tank 2; the ballast device, however, may be configured to include two or more ballast tanks 2. In the case of such a configuration, when the ballast tank 2 is filled with the water, one ballast tank 2 is filled to capacity, and the injecting of the water is switched to the other ballast tank 2 having a separate space, the pressure by a water level of the ballast tank 2 (back pressure) drops suddenly, and the sudden pressure drop occurs in the water treatment device 10. Therefore, in the configuration in which a plurality of ballast tanks 2 is included, it is preferable that the controller 15 has a switch mode M3 in the opening and closing control of the first control valve FCV1 and the second control valve FCV2 in addition to the normal mode M1 and the low flow rate mode M2.

In the normal mode M1 and the low flow rate mode M2, basically, when the pressure drops, the pressure is increased by a stepwise opening of the first control valve FCV1, but in the control of gradually increasing the opening degree of the first control valve FCV1, the pressure increases only gradually. In this case, in particular, when the filter 11 is configured to perform the backwashing, the pressure for the backwashing is insufficient and the time during which the backwashing is not normally performed continues for a long time, which is not preferable.

Therefore, in the switch mode M3, when the sudden pressure drop occurs, the pressure is increased not by increasing the opening degree of the first control valve FCV1 but by gradually decreasing the opening degree of the second control valve FCV2. As a result, the flow rate of the ballast water temporarily decreases, but the pressure can be returned to the normal pressure range in a short time as compared with the case where the opening degree of the first control valve FCV1 is increased.

### <Modification Example 2>

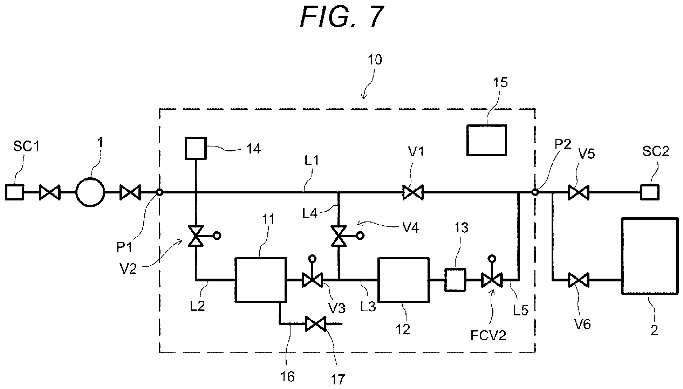

In the above-described embodiment, the valve V2, the valve V3, and the valve V4 provided in the second line L2, the third line L3, and the fourth line L4 are respectively the on-off valves that can be set to only two states of being opened or closed, and in addition to the valves, the first control valve FCV1 capable of adjusting the opening degree is separately provided (see FIG. 1). However, as shown in FIG. 7, a configuration is adoptable, in which without the first control valve FCV1 being provided, the valve V2 is set as the second valve, the valve V3 is set as the third valve, and the valve V4 is set as the fourth valve, each of which is the control valve capable of adjusting the opening degree such that the pressure control is performed. Specifically, the controller 15 basically controls the flow rate of the ballast water by the second control valve FCV2 (fifth valve) provided on the fifth line L5 as in the above-described embodiment and controls the pressure by adjusting the opening degree of the valve V2 and the valve V3. Note that the flow rate adjustment in a case where the pressure of the filter 11 (filter pressure) is high in the low flow rate mode M2 is performed by the valve V2 and the second control valve FCV2, and the flow rate adjustment in a case where the pressure of the filter 11 (filter pressure) is low is performed by the valve V3 and the second control valve FCV2. Further, when the filter 11 is bypassed in the deballasting operation or the like, the flow rate adjustment is performed by the valve V4 and the second control valve FCV2. Further, in the start mode at the time of starting the operation, the valves V2 and V3 are gradually opened from a slightly opened state to prevent a sudden inflow of the ballast water. Even with such a configuration, the effect similar to the above embodiment can be obtained. Also in this configuration, the valve V1 as the first valve provided on the first line L1 may be an on-off valve.

### <Modification Example 3>

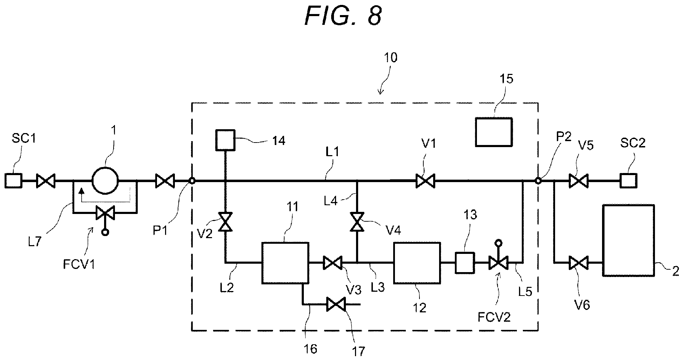

In the above embodiment, the first control valve FCV1 is provided on the downstream side of the upstream side connection portion P1 which is the connection portion on the pump 1 side. However, as shown in FIG. 8, a configuration is adoptable, in which a circulation line L7 from a discharge side to a suction side for the pump 1 is provided in the ballast device, and the first control valve FCV1 is provided on the circulation line L7. In the case of this configuration, the pressure in the water treatment device 10 can be dropped by increasing the opening degree of the first control valve FCV1.

### <Modification Example 4>

In the above embodiment, the configuration is adopted in which the pressure gauge 14 is disposed at the position of the upstream side of the connection position of the first line L1 to the fourth line L4, that is, on the upstream side of the filter 11, and the controller 15 adjusts the opening degrees of the first control valve FCV1 and the second control valve FCV2 based on the pressure on the upstream side of the filter 11. However, the installation location of the pressure gauge 14 is not limited to the upstream side of the filter 11 or the controller, and may be installed at any position on the purification line. For example, the pressure gauge 14 may be installed between the filter 11 and the ultraviolet reactor 12, or may be installed on the downstream side of the ultraviolet reactor 12. Also in such a case, it is possible to gauge the pressure change of the ballast water flowing through the purification line, and it is possible to maintain the pressure of the ballast water in the purification line within the predetermined range by the control of the controller 15. In the purification line, the second line L2, the fourth line L4, or the like is a line through which the ballast water flows during only one of the time of the ballasting operation or the deballasting operation. In a case where the pressure gauge 14 is provided on the line, for example, the pressure gauge 14 is installed in each of the second line L2 and the fourth line L4. That is, by installing a plurality of pressure gauges 14, it is possible to gauge the pressure of the purification line during either the time of the ballasting operation or the time of the deballasting operation.

### <Other Modification Example>

- In the above embodiment, the controller 15 controls both the first control valve FCV1 and the second control valve FCV2, but a configuration is adoptable, in which the second control valve FCV2 is not controlled by the controller 15, which includes an example of a manual operation. In this case, the controller 15 acquires the opening degree of the second control valve FCV2 and controls the opening degree of the first control valve FCV1.
- In the above-described embodiment, the flow rate and the pressure are controlled by the two control valves of the first control valve FCV1 and the second control valve FCV2 which are capable of adjusting the opening degree. However, a configuration is adoptable, in which without the first control valve FCV1 being provided, an on-off valve having a through hole in a valve body may be provided at the position. The on-off valve is preferably a fixed pressure loss type valve. Even in this case, since the pressure loss occurs on the upstream side of the purification unit, it is possible to suppress the pressure increase in the purification unit.
- In the above embodiment, the water treatment device 10 includes the filter 11 and the ultraviolet reactor 12 as the purification unit, but a configuration is adoptable, in which only one of the filter 11 and the ultraviolet reactor 12 is provided, or in which the other purification unit is used.
- The above-described embodiment has a configuration in which two purification unit of the filter 11 and the ultraviolet reactor 12 are disposed between the first valve (first control valve FCV1) and the second valve (second control valve FCV2), but only single purification unit may be disposed between the first valve and the second valve, and the other purification unit may be disposed on the upstream side of the first valve or on the downstream side of the second valve. Also in this case, it is possible to suppress the pressure change range of the purification unit disposed between the first valve and the second valve, and to suppress the occurrence of the cavitation.
- In the above embodiment, the flow meter 13 is provided on the fifth line L5 (downstream side of filter 11), but may be disposed at any position on the purification line.
- In the above embodiment, an example in which the water treatment device 10 is applied to the ballast device has been described, but the water treatment device 10 of the present invention can be used as the water treatment device that treats various kinds of water such as rivers, lakes, ponds, industrial water, or the like, in addition to the ballast device.

### EXPLANATION OF REFERENCE NUMERALS

1: Pump
2: Ballast tank
10: Water treatment device
11: Filter
12: Ultraviolet reactor
13: Flow meter
14: Pressure gauge
15: Controller
16: Discharge pipe
17: Backwash valve
20: Purification unit
FCV1: First control valve
FCV2: Second control valve
L1-L7: Line
M1: Normal mode
M2: Low flow rate mode
M3: Switch mode
P1: Upstream side connection portion
P2: Downstream side connection portion
S1 to S14: Step
SC1: Sea chest
SC2: Outboard discharge port
V1 to V7: On-off valve

## Claims

1. A water treatment device that performs purification treatment on water, comprising:
a purification unit disposed on a purification line through which the water flows during the purification treatment;
a first valve disposed on the purification line through which the water flows during the purification treatment; and
a second valve disposed on the purification line through which the water flows during the purification treatment,
wherein: the first valve is provided on an upstream side of the purification unit;
the second valve is a control valve provided on a downstream side of the purification unit and capable of adjusting an opening degree; and
a pressure of the water flowing through the purification unit is dropped by the first valve.

2. The water treatment device according to claim 1, wherein
the first valve is the control valve capable of adjusting the opening degree;
the water treatment device further comprises a controller; and
the controller controls the opening degree of the first valve.

3. The water treatment device according to claim 2, further comprising:
a flow meter; and
a pressure gauge; wherein
the flow meter is disposed on the purification line and measures a flow rate of the water flowing through the purification line; wherein
the pressure gauge is disposed on the purification line and gauges a pressure of the water flowing through the purification line; and wherein
the controller controls the opening degrees of the first valve and the second valve based on the flow rate of the water measured by the flow meter and the pressure gauged by the pressure gauge.

4. The water treatment device according to claim 3, wherein
the controller controls the opening degree of the first valve such that a change range of the pressure becomes small in a state in which the opening degree of the second valve is kept constant.

5. The water treatment device according to claim 4, wherein the controller adjusts the opening degrees of the first valve and the second valve such that the flow rate and the pressure are respectively maintained within predetermined ranges.

6. A water treatment device that treats water, comprising:
a filter;
ultraviolet irradiation unit;
first to fifth lines;
first to fifth valves;
a pressure gauge;
a flow meter;
a controller;
an upstream side connection portion; and
a downstream side connection portion,
wherein: the first line bypasses the filter and the ultraviolet irradiation unit;
the second line connects the upstream side connection portion to the filter;
the third line connects the filter to the ultraviolet irradiation unit;
the fourth line connects the first line to the third line;
the fifth line connects the ultraviolet irradiation unit to the downstream side connection portion;
the first valve is disposed on the first line;
the second valve is a control valve disposed on the second line and capable of adjusting an opening degree;
the third valve is a control valve disposed on an upstream side of a connection position of the third line to the fourth line and capable of adjusting the opening degree;
the fourth valve is a control valve disposed on the fourth line and capable of adjusting the opening degree;
the fifth valve is a control valve disposed on the fifth line and capable of adjusting the opening degree;
the pressure gauge is disposed on the second line; and
the controller adjusts the opening degrees of the second to fifth valves in accordance with values of the pressure gauge and the flow meter.
